# EUROPÄISCHE PATENTSCHRIFT

(11) **EP 2 819 789 B1**
(45) Veröffentlichungstag und Bekanntmachung des Hinweises auf die Patenterteilung: **07.08.2019**
(21) Anmeldenummer: 13708727.6
(22) Anmeldetag: 27.02.2013
(51) Int. Cl.: B05D 1/24, F16C 33/42, F16C 33/56

(54) **VERFAHREN ZUR HERSTELLUNG EINES WÄLZLAGERKÄFIGS, INSBESONDERE FÜR GROßWÄLZLAGER SOWIE VORRICHTUNG ZUR DURCHFÜHRUNG DES VERFAHRENS**
PROCESS FOR PRODUCING A ROLLING BEARING CAGE, IN PARTICULAR FOR LARGE ROLLING BEARINGS, AND APPARATUS FOR CARRYING OUT THE PROCESS
PROCÉDÉ DE FABRICATION D'UNE CAGE DE PALIER À ROULEMENT, EN PARTICULIER POUR DES PALIERS À ROULEMENT DE GRANDE DIMENSION, ET DISPOSITIF PERMETTANT DE METTRE EN OEUVRE LE PROCÉDÉ

(30) Priorität: 29.02.2012 DE 102012101649
(43) Veröffentlichungstag der Anmeldung: 07.01.2015
(73) Patentinhaber: thyssenkrupp Rothe Erde GmbH, 44137 Dortmund (DE)
(72) Erfinder: ROLLMANN, Jörg, 59558 Lippstadt (DE); SCHNIEDER, Stefan, 59558 Lippstadt (DE); LEONHARD, Markus, 33659 Bielefeld (DE); JÜRGENS, Reinhard, 59555 Lippstadt (DE)
(74) Vertreter: Loock, Jan Pieter
(86) Internationale Anmeldenummer: PCT/EP2013/053932
(87) Internationale Veröffentlichungsnummer: WO 2013/127852

(56) Entgegenhaltungen:
- DE-A1- 1 577 915
- DE-A1- 1 915 330
- DE-A1- 19 731 892
- DE-A1-102009 031 722
- FR-A- 1 302 611
- GB-A- 1 475 295
- GB-A- 2 062 128
- US-A- 4 911 949

## Beschreibung

Die Erfindung betrifft ein Verfahren zur Herstellung eines Wälzlagerkäfigs, insbesondere für Großwälzlager, sowie eine Vorrichtung zur Durchführung des Verfahrens.

Der Wälzlagerkäfig ist dazu vorgesehen, die Wälzkörper, gemäß der vorliegenden Erfindung üblicherweise Kugeln, auf einem gleichbleibenden Abstand zueinander zu halten. Entsprechende Käfige können gemäß dem Stand der Technik als offener oder geschlossener Ring oder aus einer Vielzahl von Segmenten gebildet sein.

Der Wälzlagerkäfig soll insbesondere für Großwälzlager geeignet sein, so dass der Durchmesser des Käfigs dann zumindest einen Meter beträgt. Bei Großwälzlagern ergeben sich allein aufgrund der Größe Einschränkungen bezüglich der Herstellung geeigneter Wälzlagerkäfige. So sind gespritzte Kunststoffkäfige angesichts der Kosten für entsprechende Spritzgussformen und der üblichen Stückzahl von Großwälzlagern unwirtschaftlich. Käfige aus einfachen Kunststoffstreifen sind zwar kostengünstig zu fertigen, weisen aber in Umfangsrichtung nur eine sehr geringe Festigkeit auf und sind deshalb für viele Anwendungen nicht geeignet. Dabei ist auch zu berücksichtigen, dass gerade bei Großwälzlagern ein nachträglicher Austausch des Lagers zum Teil mit sehr hohen Kosten und einem sehr großen Aufwand verbunden ist.

Aus der DE 30 41 355 A1 ist ein Käfig für ein herkömmliches Kugellager mit einem inneren Laufring, einem äußeren Laufring und mehreren dazwischen angeordneten Kugeln bekannt, wobei der Käfig aus zwei Blechteilen gebildet ist, die jeweils einen Überzug aus Kunststoff aufweisen. Die Herstellung eines solchen aus zwei umgeformten und beschichteten Blechstreifen gebildeten Käfigs ist aufwendig und nicht für Großwälzlager geeignet. Da die Beschichtung in einem elektrostatischen Verfahren oder einem Strömungsbettverfahren zunächst auf die Stanzteile aufgebracht wird, verbleiben nach der Verbindung der Stanzteile Übergänge, an denen eine erhöhte Gefahr der Beschädigung bestehen kann. Als Beschichtung ist ein thermoplastischer Kunststoff, insbesondere Polyamid vorgesehen, um die Kontaktflächen des Käfigs mit den Kugeln und dem inneren bzw. dem äußeren Laufring vor Verschleiß zu schützen und den Reibwert zu verringern.

Aus der DE 197 51 003 A1 sind ein Verfahren sowie eine Vorrichtung zum Beschichten von Werkstücken mit einem pulvrigen, granulösen, flüssigen oder pastösem Beschichtungsmedium bekannt, wobei das Aufbringen des Beschichtungsmediums in einem Wirbelbett erfolgt. Überschüssiges Beschichtungsmedium wird noch vor dem endgültigen Anschmelzen und Anhaften an dem Werkstück entfernt. Es ist deshalb eine aufwendige Verfahrensführung notwendig. Das beschriebene Verfahren und die beschriebene Vorrichtung sind insbesondere für Endlos-Werkstücke vorgesehen, die dann nachträglich in ihren endgültige Form gebracht werden.

Die Druckschrift DE 10 2009 031 722 A1 offenbart einen Käfig für ein Kugellager sowie ein Verfahren zur Herstellung eines Käfigs für ein Kugellager, wobei ein Stahlstreifen mit Öffnungen für jeweils einen Wälzkörper bereitgestellt und zu einem Ring gebogen wird.

Die Druckschrift US 4 911 949 A offenbart ein Beschichtungsverfahren zum Beschichten eines Metallteils mit einem thermoplastischen Kunststoff wobei das Metallteil erhitzt und dabei in ein Wirbelbett mit dem thermoplastischen Kunststoff getaucht wird.

Der vorliegenden Erfindung liegt die Aufgabe zugrunde, ein Verfahren sowie eine Vorrichtung zur Herstellung eines Wälzlagerkäfigs anzugeben, mit denen insbesondere auch für Großwälzlager auf einfache Weise ein ausreichend fester aber auch verschleißresistenter Wälzlagerkäfig bereitgestellt werden kann.

Zur Lösung dieser Aufgabe ist erfindungsgemäß ein Verfahren gemäß Anspruch 1 vorgesehen.

Erfindungsgemäß wird zunächst ein Stahlstreifen bereitgestellt und zu einem Ring gebogen. Die Enden des Stahlstreifens können dabei verschweißt sein oder lose voreinander liegen, um einen geschlossenen bzw. einen offenen Käfig zu bilden. Der Ring hat dabei bereits die Form des Wälzlagerkäfigs und ist dann in dieser Endform mit einer Beschichtung aus einem thermoplastischen Kunststoffpulver zu beschichten. Dazu wird der Ring auf eine Temperatur erhitzt, die erforderlich ist, um ein Kunststoffpulver an dem Ring anhaften und aufschmelzen zu lassen. Der Ring wird dazu in ein Wirbelbett mit thermoplastischem Kunststoffpulver getaucht, welches entsprechend groß genug ausgebildet sein muss, um den gesamten Ring aufnehmen zu können.

Während des Verweilens des Ringes in dem Wirbelbett haftet das Kunststoffpulver an dem Ring an und schmilzt auf, wodurch eine durchgehende, geschlossene Schicht gebildet wird. Mit zunehmender Verweilzeit des Ringes in dem Wirbelbett nimmt auch die Schichtdicke zu. Nach der Entnahme des Ringes aus dem Wirbelbett ist keine weitere Erwärmung, Umformung oder dergleichen notwendig.

Im Rahmen der Erfindung ist es aber möglich, den Ring nach der Entnahme aus dem Wirbelbett, beispielsweise mit einem Gebläse, zu kühlen, um die Beschichtung zu verfestigen und um den fertigen Ring leicht handhaben und lagern zu können. Nach dem erfindungsgemäßen Verfahren wird über dem gesamten Ring eine sehr gleichmäßige und an allen Stellen gut anhaftende Beschichtung erreicht.

Der Ring wird erfindungsgemäß durch ein elektromagnetisches Wechselfeld einer Induktionsspule auf die für die Beschichtung erforderliche Temperatur erwärmt. Auch bei Großwälzlagern mit einem Käfigdurchmesser von mehr als einem Meter ist die Erwärmung durch eine Induktionsspule leicht möglich. Hinsichtlich der Erwärmung durch Induktion ergibt sich auch der Vorteil, dass der bereitgestellte Stahlstreifen bereits zu einem Ring gebogen ist. So kann auch die Induktionsspule auf einfache Weise ringförmig ausgebildet und konzentrisch mit dem Ring angeordnet werden. Bei einer konzentrischen Anordnung der Induktionsspule innerhalb oder außerhalb des Ringes ergibt sich ein gleichmäßiger Spalt und damit eine besonders gleichmäßige Erwärmung.

Da der Ring aus einem Metallstreifen gebildet ist, kann dieser durch die Induktionsspule auch in einer kurzen Zeit erwärmt werden, wodurch bei der nachfolgenden Beschichtung in dem Wirbelbett die Haftung des Kunststoffpulvers begünstigt wird. Dabei ist es zu berücksichtigen, dass sich bei einer aufgewärmten Oberfläche eine erhöhte chemische Aktivität ergibt, welche durch eine Anlagerung von Fremdstoffen, einer Oxidation oder dergleichen, die Haftung beeinträchtigen kann. Im Bereich zu einer Erwärmung im Ofen, wobei üblicherweise eine Umwälzung der Ofenatmosphäre erfolgt, wird der Ring auch im geringeren Maße Staub oder ähnlichen Fremdkörpern ausgesetzt. Die Erwärmung durch die Induktionsspule lässt sich schließlich auch gut in eine Linienfertigung integrieren, bei der mehrere Wälzlagerkäfige in unmittelbarer Folge nacheinander gefertigt werden.

Die ein- oder mehrwindige Induktionsspule ist zweckmäßigerweise in einer Erwärmungszone angeordnet, die nahe bei dem Wirbelbett, insbesondere unmittelbar oberhalb des Wirbelbettes gebildet ist. Temperaturverluste während des Transports des Ringes können damit vermieden werden. Erfindungsgemäß ist die Induktionsspule beweglich augestaltet, um diese in die Erwärmungszone hinein bzw. aus der Erwärmungszone heraus bewegt werden zu können. Erfindungsgemäß ist die Induktionsspule, die bei einem Großwälzlager eine erhebliche Größe aufweist, auf Schienen geführt.

Auch wenn aus Gründen der Energieeffizienz Temperaturverluste während oder nach der Erwärmung möglichst gering zu halten sind, ist erfindungsgemäß zwischen dem Erwärmen des Ringes und dem Eintauchen in das Wirbelbett eine Pause vorgesehen, die zur Vergleichmäßigung der Temperatur dient. Hinsichtlich der Erwärmung durch Induktion und der Vergleichmäßigung der Temperatur ist es von Vorteil, wenn der zu einem Ring gebogene Metallstreifen im Rahmen des erfindungsgemäßen Verfahrens an seinen Enden durch eine Verschweißung oder dergleichen geschlossen wird.

Die Auswahl der Temperatur ist im Rahmen der Erfindung von besonderer Bedeutung, weil bei einer zu niedrigen Temperatur das in dem Wirbelbett an dem Ring anhaftende Pulver nur zu einem unzureichenden Maße aufgeschmolzen werden kann. Bei einer zu hohen Temperatur besteht dagegen die Gefahr, dass der Kunststoff zu dünnflüssig wird und sich aufgrund der Schwerkraft eine ungleichmäßige Verteilung der Beschichtung ergibt. Schließlich muss die Temperatur anhand des als Beschichtung vorgesehenen thermoplastischen Kunststoffs ausgewählt werden, wobei auch eine gewisse Abkühlung während des Beschichtungsprozesses innerhalb des Wirbelbettes Berücksichtigung finden muss. Die bevorzugte vorgesehene induktive Erwärmung kann einerseits sehr schnell, beispielsweise in wenigen Sekunden, erfolgen, wobei andererseits aber eine genaue Temperatursteuerung unter Berücksichtigung der zugeführten Leistung möglich ist.

Im Rahmen der Erfindung ist es auch möglich den Ring während der Erwärmung in der Erwärmungszone und/oder der Beschichtung im Wirbelbett zu bewegen, um die Erwärmung bzw. die Beschichtung noch gleichmäßiger zu gestalten. Der Ring kann beispielsweise geschwenkt, gedreht oder gerüttelt werden, wobei auch eine Kombination dieser Bewegungen möglich ist. Während in dem Wirbelbett durch ein Schwenken oder Drehen eine ungleichmäßige Verteilung des Kunststoffpulvers ausgeglichen werden kann, bewirkt ein Rütteln, das nur soviel Kunststoffpulver an dem Ring anhaftet, wie auch unmittelbar angeschmolzen werden kann. Lokale Materialanhäufungen, Verklumpungen auf dem Ring oder dergleichen können so sicher vermieden werden. Das Rütteln trägt somit zu einer noch gleichmäßigeren Beschichtung bei, wobei jedoch der Schichtaufbau unter Umständen verlangsamt sein kann.

Bei dem zum Biegen des Ringes bereitgestellten Stahlstreifen kann es sich um einen einfachen Streifen eines Blechs handeln, wobei dann die Öffnungen durch Stanzen, Schneiden, insbesondere thermisches Schneiden, oder Bohren erzeugt werden.

Um eine Beschichtung durch ein Aufschmelzen zu erreichen, ist ein thermoplastisches Kunststoffpulver einzusetzen. Zweckmäßigerweise wird dabei ein Polymer oder eine Polymermischung eingesetzt, welche sich durch eine gute Widerstandsfähigkeit sowie einen geringen Reibwert auszeichnet. Geeignet sind beispielsweise Kunststoffpulver auf der Basis von Polyamid (PA) oder Polyethereton. Insbesondere Poyletheretherketon (PEEK) zeichnet sich durch eine gute Wärme- und Chemikalienbeständigkeit aus.

Im Rahmen der Erfindung können auch Polymermischungen oder mit Partikeln verstärkte Polymere eingesetzt werden. Dabei ist es möglich entsprechende Mischungen schon in den einzelnen Pulverpartikeln vorzusehen oder auf besonders einfache Weise ein Pulvergemisch bereit zu halten. So ist es beispielsweise denkbar neben dem thermoplastischen Kunststoffpulver Verstärkungsstoffe wie Fasern oder auch reibungsmindernde Partikel in dem Wirbelbett vorzusehen. Denkbar ist es auch zusätzlich zu einem thermoplastischen Kunststoffpulver auf der Basis von Polyamid oder Polyethaketon reibungsmindernde Partikel, wie beispielsweise Fluorpolymerpartikel, in dem Wirbelbett vorzusehen. Durch die gleichmäßige Verteilung des Pulvers in dem Wirbelbett werden auch unterschiedliche Materialien auf dem Ring verteilt und durch das Aufschmelzen des thermoplastischen Pulvers miteinander verbunden bzw. in die Kunststoffmatrix eingebaut.

Die Dicke der Beschichtung liegt zweckmäßigerweise zwischen 0,4 mm und 1,3 mm. Die Schichtdicke kann durch die Verweilzeit des Ringes in dem Wirbelbett auf einfache Weise verändert werden.

Vor der Beschichtung und vorzugsweise nach dem Biegen des Stahlstreifens zu dem Ring kann im Rahmen der Erfindung eine Reinigung oder andere Oberflächenbearbeitung vorgesehen sein. Besonders vorteilhaft ist die Vergütung der Oberfläche des Ringes durch einen Partikelstrahl, beispielsweise eine Bearbeitung durch Sandstrahlen oder ein Strahlen mit Korund. Im Rahmen einer solchen Bearbeitung können Verschmutzungen sowie oberflächliche Materialfehler beseitigt werden. Darüber hinaus wird an der Oberfläche eine Mikrostruktur erzeugt, die im besonderen Maße für die Aufnahme einer Beschichtung geeignet ist. Schließlich kann durch ein Strahlen der Oberfläche auch die Festigkeit und Widerstandsfestigkeit weiter verbessert werden.

Um die Haftung der Beschichtung zu verbessern, kann der Ring vor der eigentlichen Beschichtung mit einer Haftvermittlerschicht als Grundierung versehen werden. Geeignet sind insbesondere Haftvermittler auf der Basis organischer Lösungsmittel und synthetischer Polymere, die bevorzugt bereits vor der Erwärmung aufgebracht werden.

Gegenstand der Erfindung ist auch eine Vorrichtung zur Durchführung des beschriebenen Verfahrens, gemäß Anspruch 8. Der zu beschichtende Ring ist an der Halteeinrichtung befestigt, die zwischen der Erwärmungszone und dem darunter liegenden Wirbelbett höhenverstellbar ist. Zumindest die den Ring haltenden Teile der Halteeinrichtung in Form von Greifern, Armen oder dergleichen sind vorzugsweise aus einem elektromagnetisch neutralen Material, das heißt einem unmagnetischen und nicht leitenden Material gebildet. Der Ring ist vorzugsweise an seinen axialen Stirnflächen gehalten.

Die Erfindung wird anhand von Figuren erläutert, die lediglich mögliche Ausführungsbeispiele darstellen. Es zeigen:
- **Fig. 1**: einen Käfig in perspektivischer Darstellung,
- **Fig. 2**: einen Querschnitt durch ein Großwälzlager,
- **Fig. 3**: eine erfindungsgemäße Vorrichtung zur Herstellung eines beschichteten Wälzlagerkäfigs,
- **Fig. 4**: eine Draufsicht zu Fig. 3.

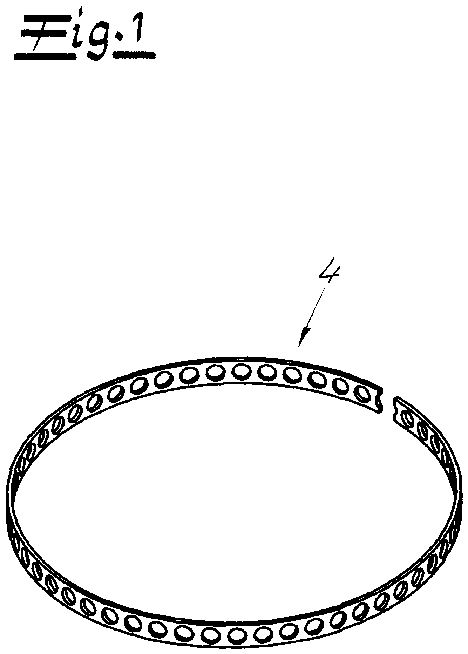

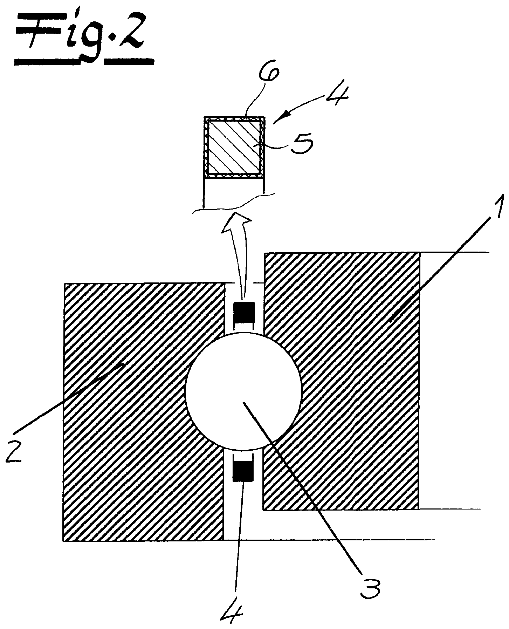

Die Fig. 2 zeigt in einer stark schematisierten Ansicht einen Querschnitt durch ein Großwälzlager, welches einen inneren Laufring 1, einen äußeren Laufring 2 und dazwischen angeordnete Kugeln 3 als Wälzkörper aufweist. Die Kugeln 3 stützen den inneren Laufring 1 gegenüber dem äußeren Laufring 2 drehbar ab, wobei die Kugeln 3 in bekannter Weise durch einen Wälzlagerkäfig 4 auf Abstand gehalten sind. Die Fig. 1 zeigt den Wälzlagerkäfig 4 in einer Detailansicht.

In der Fig. 2 ist angedeutet, dass der Wälzlagerkäfig 4 aus einem metallischen Grundkörper in Form eines Ringes 5 und einer darauf angeordneten Beschichtung 6 aus thermoplastischem Kunststoff besteht. Während der Ring 5 dem Wälzlagerkäfig 4 eine hohe Stabilität verleiht, bewirkt die Beschichtung 6 eine Reduzierung der Reibung sowie einen effektiven Schutz gegen Verschleiß. Als Beschichtung 6 sind insbesondere Polyamid (PA) und Polyetherketone wie PEEK mit einer Schichtdicke zwischen 0,4 mm 1,3 mm geeignet.

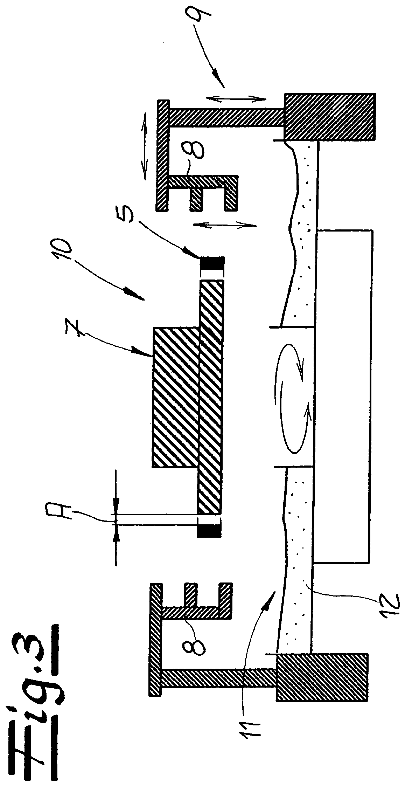

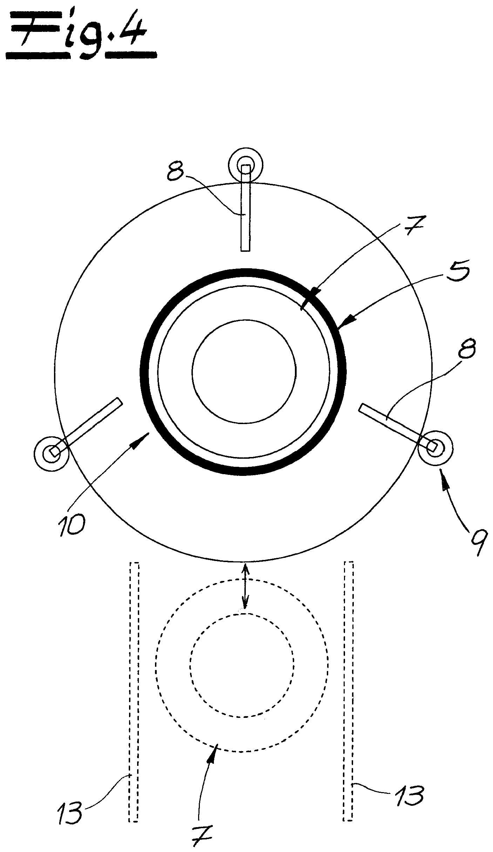

Die Fig. 3 und 4 zeigen eine mögliche Ausgestaltung einer Vorrichtung zur Beschichtung des Ringes 5. Um den Ring 5 vor der Beschichtung zu erwärmen, ist eine ringförmige Induktionsspule 7 vorgesehen, die zentriert mit einem gleichbleibenden Kopplungsabstand A innerhalb des Ringes 5 angeordnet ist. Der Ring 5 wird mit Hilfe von Armen 8 einer Halteeinrichtung 9 gehalten. Die Arme 8 der Halteeinrichtung 9 sind sowohl in vertikaler Richtung als auch in waagerechter Richtung radial beweglich.

Der Ring 5 kann nach Erwärmung mit Hilfe der höhenverstellbaren Halteeinrichtung 9 in ein unterhalb der Erwärmungszone 10 angeordnetes Wirbelbett 11 abgesenkt werden, in dem ein Kunststoffpulver 12 vorhanden ist.

Die Erwärmung wird so durchgeführt, dass der Ring 5 auf eine Temperatur oberhalb einer minimalen Beschichtungstemperatur erwärmt wird. Während des Verweilens des Ringes 5 in dem Wirbelbett 11 haftet das thermoplastische Kunststoffpulver 12 an dem Ring 5 an und schmilzt auf. Dadurch wird die zuvor beschriebene durchgehende Beschichtung 6 gebildet.

Nach der Kunststoffbeschichtung wird der fertige Wälzlagerkäfig 4 bestehend aus dem innen liegenden Ring 5 und der darauf angeordneten Beschichtung 6 aus dem Wirbelbett 11 entnommen.

In der Fig. 4 sind zusätzlich Schienen 13 dargestellt, auf denen die Induktionsspule 7 in die Erwärmungszone 10 hinein und aus dieser heraus bewegt werden kann.

## Patentansprüche

1. Verfahren zur Herstellung eines Wälzlagerkäfigs (4), insbesondere für ein Großwälzlager,
wobei ein Stahlstreifen mit Öffnungen für jeweils einen Wälzkörper bereitgestellt und zu einem Ring (5) gebogen wird,
wobei der Ring (5) nachfolgend zum thermischen Beschichten mit einem thermoplastischen Kunststoffpulver (12) auf eine Temperatur oberhalb einer minimalen Beschichtungstemperatur erwärmt wird,
wobei der Ring (5) nachfolgend in ein Wirbelbett mit dem thermoplastischen Kunststoffpulver (12) getaucht wird,
wobei während des Verweilens des Ringes (5) in dem Wirbelbett (11) Kunststoffpulver (12) an dem Ring anhaftet, aufschmilzt und eine durchgehende Beschichtung (6) bildet und
wobei der Ring nach der Beschichtung aus dem Wirbelbett (11) entnommen wird **dadurch gekennzeichnet, dass**
der Ring (5) durch ein elektromagnetisches Wechselfeld einer Induktionsspule (7) erwärmt wird, wobei zwischen dem Erwärmen des Ringes (5) und dem Eintauchen in das Wirbelbett (11) eine Pause zur Vergleichmäßigung der Temperatur des Ringes (5) vorgesehen ist, wobei der Ring (5) auch am Ende der Pause eine Temperatur oberhalb der minimalen Beschichtungstemperatur aufweist.

2. Verfahren nach Anspruch 1, wobei die Induktionsspule (7) ringförmig ausgebildet und konzentrisch mit dem Ring (5) angeordnet ist.

3. Verfahren nach einem der Ansprüche 1 bis 2, wobei zum Biegen des Ringes (5) zunächst ein ebener Stahlstreifen bereitgestellt wird, in dem die Öffnungen durch Stanzen, Schneiden oder Bohren erzeugt werden.

4. Verfahren nach einem der Ansprüche 1 bis 3, **dadurch gekennzeichnet, dass** der Ring (5) während der Erwärmung in einer Erwärmungszone (10) und/oder der Beschichtung in dem Wirbelbett (11) bewegt wird.

5. Verfahren nach einem der Ansprüche 1 bis 4, wobei die Öffnungen zur Aufnahme von Kugeln (3) als Wälzkörpern kreisförmig sind.

6. Verfahren nach einem der Ansprüche 1 bis 5, wobei ein thermoplastisches Kunststoffpulver (12) aus Polyamid oder Polyetherketon verwendet wird.

7. Verfahren nach einem der Ansprüche 1 bis 6, wobei die Beschichtung (6) mit einer Dicke zwischen 0,4 mm bis 1 ,3 mm gebildet wird.

8. Vorrichtung zur Durchführung des Verfahrens nach einem der Ansprüche 1 bis 7, mit einer Erwärmungszone (10), einem Wirbelbett (11) mit thermoplastischem Kunststoffpulver (1 2) und einer höhenverstellbaren Halteeinrichtung (9) zur Aufnahme von Ringen (5), die mittels der Halteeinrichtung (9) in das Wirbelbett (11) absenkbar sind, wobei die Vorrichtung eine Induktionsspule (7) zum induktiven Erwärmen des Ringes (5) aufweist, **dadurch gekennzeichnet, dass** die Induktionsspule (7) beweglich und auf Schienen (13) geführt ausgebildet ist.

## Claims

1. Process for producing a rolling bearing cage (4), in particular for a large rolling bearing,
wherein a steel strip having openings for in each case one rolling body is provided and bent to form a ring (5),
wherein, for thermal coating with a thermoplastic powder (12), the ring (5) is subsequently heated to a temperature above a minimum coating temperature,
wherein the ring (5) is subsequently dipped in a fluidized bed containing the thermoplastic powder (12), wherein, during the residence time of the ring (5) in the fluidized bed (11), plastics powder (12) adheres to the ring, melts and forms a continuous coating (6), and wherein the ring is removed from the fluidized bed (11) after the coating,
**characterized in that**
the ring (5) is heated by an alternating electromagnetic field of an induction coil (7), wherein a pause for making the temperature of the ring (5) uniform is provided between the heating of the ring (5) and the dipping into the fluidized bed (11), wherein the ring (5) is also at a temperature above the minimum coating temperature at the end of the pause.

2. Process according to Claim 1, wherein the induction coil (7) is configured in an annular manner and is arranged concentrically with the ring (5).

3. Process according to either of Claims 1 and 2, wherein, in order to bend the ring (5), first of all provision is made of a planar steel strip in which the openings are produced by punching, cutting or boring.

4. Process according to one of Claims 1 to 3, **characterized in that** the ring (5) is moved in a heating zone (10) during heating and/or in the fluidized bed (11) during coating.

5. Process according to one of Claims 1 to 4, wherein the openings for receiving balls (3) as rolling bodies are circular.

6. Process according to one of Claims 1 to 5, wherein a thermoplastic powder (12) made of polyamide or polyether ketone is used.

7. Process according to one of Claims 1 to 6, wherein the coating (6) is formed with a thickness of between 0.4 mm and 1.3 mm.

8. Apparatus for carrying out the process according to one of Claims 1 to 7, having a heating zone (10), a fluidized bed (11) containing thermoplastic powder (12) and a height-adjustable holding device (9) for receiving rings (5) which are lowerable into the fluidized bed (11) by means of the holding device (9), wherein the apparatus has an induction coil (7) for inductively heating the ring (5), **characterized in that** the induction coil (7) is configured in a movable manner guided on rails (13).

## Revendications

1. Procédé de fabrication d'une cage de roulement (4), en particulier pour une couronne d'orientation,
dans lequel une bande d'acier dotée d'ouvertures pour chaque élément de roulement est préparée et pliée en une bague (5),
dans lequel la bague (5) est ensuite chauffée à une température supérieure à une température d'enrobage minimale pour l'enrobage thermique avec une poudre thermoplastique (12),
dans lequel la bague (5) est ensuite immergée dans un lit fluidisé avec la poudre thermoplastique (12),
dans lequel, pendant le séjour de la bague (5) dans le lit fluidisé (11), la poudre thermoplastique (12) adhère à la bague, fond et forme un enrobage continu (6) et
dans lequel la bague est enlevée du lit fluidisé (11) après l'enrobage
**caractérisé en ce que** la bague (5) est chauffée par le biais d'un champ alternatif électromagnétique d'une bobine d'induction (7), dans lequel une pause d'homogénéisation de la température de la bague (5) est prévue entre le chauffage de la bague (5) et l'immersion dans le lit fluidisé (11), dans lequel la bague (5) possède même à la fin de la pause une température supérieure à la température d'enrobage minimale.

2. Procédé selon la revendication 1, dans lequel la bobine d'induction (7) est conçue comme annulaire et concentrique à la bague (5).

3. Procédé selon l'une des revendications 1 à 2, dans lequel une bande d'acier plate est en outre préparée pour le pliage de la bague (5), dans laquelle les ouvertures sont obtenues par emboutissage, découpage ou alésage.

4. Procédé selon l'une des revendications 1 à 3, **caractérisé en ce que**, pendant le chauffage dans une zone de chauffage (10) et/ou pendant l'enrobage dans le lit fluidisé (11), la bague (5) est déplacée.

5. Procédé selon l'une des revendications 1 à 4, dans lequel les ouvertures sont de forme circulaire pour recevoir des billes (3) en tant qu'éléments de roulement.

6. Procédé selon l'une des revendications 1 à 5, dans lequel une poudre thermoplastique (12) à base de polyamide ou de polyéthercétone est utilisée.

7. Procédé selon l'une des revendications 1 à 6, dans lequel l'enrobage (6) est formé avec une épaisseur entre 0,4 mm et 1,3 mm.

8. Dispositif destiné à la mise en oeuvre du procédé selon l'une des revendications 1 à 7, avec une zone de chauffage (10), un lit fluidisé (11) avec de la poudre thermoplastique (12) et un moyen de maintien (9) réglable en hauteur destiné à recevoir les bagues (5), lesquelles peuvent être abaissées dans le lit fluidisé (11) grâce au moyen de maintien (9), le dispositif comportant une bobine d'induction (7) destinée au chauffage inductif de la bague (5), **caractérisé en ce que** la bobine d'induction (7) est conçue pour être mobile et guidée sur des rails (13).
